# EUROPEAN PATENT SPECIFICATION

(11) **EP 2 947 013 B1**
(45) Date of publication and mention of the grant of the patent: **01.03.2017**
(21) Application number: 14173555.5
(22) Date of filing: 23.06.2014
(51) Int. Cl.: B64D 33/08, B64C 27/06

(54) **Helicopter**
Helikopter
Hélicoptère

(30) Priority: 23.05.2014 IT MO20140144
(43) Date of publication of application: 25.11.2015
(73) Proprietor: Robby Moto Engineering S.r.l., 26041 Casalmaggiore (CR) (IT)
(72) Inventor: Papetti, Roberto, 26041 Casalmaggiore (CR) (IT)
(74) Representative: Brunacci, Marco

(56) References cited:
- EP-A2- 0 283 578
- EP-A2- 2 615 033
- DE-C- 904 486
- DE-U1- 9 103 242
- KR-A- 20100 109 717
- US-A- 1 934 399
- US-A- 2 640 469

## Description

The present invention relates to a helicopter.

As is known, the need to monitor surrounding areas, evidenced by regional, national and international requests, is strong and growing.

In recent years, surrounding areas have undergone big changes, tied to changes in the economy which have resulted in new industrial installations, a greater concentration of the population in urban areas and in the intensive exploitation of farmland with a reduction in population in rural areas.

The development of technologies for monitoring the environment and surrounding area security represents an important segment of the more general topic of a running and control system.

The use of aeronautical means was introduced years ago with fixed-wing aircraft (airplanes) for monitoring coasts, borders, traffic, fire prevention, photographic surveys, etc.

The high costs of such means result in their only being adopted by the Armed Forces.

The activities required for regional use in the surrounding area, to be effective, must have specific characteristics:
- speedy implementation;
- reaching the place of intervention with precision, without orographic limits or road networks, in certain cases not accessible;
- availability and immediate use of instruments, equipment, and qualified personnel, so as to restrict intervention to reconnaissance but immediately giving it characteristics of "operative readiness".

To answer such requirements, the use is known of helicopters which, until now, could be classified into two macro segments:
- twin turbine-engine helicopters, i.e., having two turbine engines able to operate in a redundant way;
- single turbine-engine helicopters or of the more traditional piston type. These helicopters of known type are however affected by various drawbacks. Today's single-turbine and twin-turbine machines in fact have very high production costs (e.g., around 4,000,000 - 4,500,000 euro) and running costs (e.g., around 3,000 euro per hour of use) weighed down by a performance surplus unnecessary for the purposes of obtaining the specific characteristics mentioned above.

To this must be added that for a pilot to qualify to fly twin-turbine engine helicopters, numerous hours of training and practice are needed and the costs for obtaining a relative flying licence are so high that there are very few pilots around today.

The single piston-engine helicopters according for example to document EP 0 283 578, on the other hand, have engines of aeronautical conception, designed for fixed-wing aircraft and adapted for use on rotating wing aircraft; such types of engines are projects dating back 50/60 years ago and are called upon to operate in what are limit conditions for the construction materials (more evolved today) and for necessary helicopter speed and power requirements.

The single-engine machines, whether turbine or piston, furthermore, have no redundancy system and do not provide the safety standards needed to permit flying in certain places of the surrounding areas such as, e.g., towns/cities and sheets of water (so-called classification of "category A" as per definition of standard CS-27 of the European Aviation Safety Agency).

It is further underlined that helicopters with single-piston engine are usually called upon to operate in the proximity of the condition of maximum power output due to the high energy required by the type of aircraft.

This requires the presence of a forced cooling system based on the flow of air onto different engine parts, mainly cylinder heads, cylinders and if necessary radiating masses in which operating liquids flow.

The required air is suctioned by a centrifugal fan that absorbs power from the engine.

The inlet opening of the air being suctioned does not benefit from the impact pressure of the air which is created when the helicopter is in forward flight, i.e., in conditions of normal horizontal forward movement; the inlet air therefore is conveyed to carry out the crucial function of cooling only and exclusively through the operation of the fan which forces its movement, with a consequent considerable waste of energy.

In case of a fan malfunction, furthermore, the engine can no longer be cooled, not even with the aircraft in forward flight.

Attempts have on the other hand been made to use liquid-cooled engines.

In these case as well however, the radiating masses are not arranged in such a way as to be affected and crossed by the impact pressure of the air created frontally on the surfaces of the aircraft as a result of its forward movement.

For the radiating masses no specific ducts are envisaged for channelling the air so as to improve heat exchange; the surfaces of the radiators are in fact positioned more or less parallel to the direction of movement, both because the arrangement of the components on a helicopter is critical for reasons of available space, and because, tilting them to increase the efficiency of the heat exchange would cause an excessive increase in resistance as regards the aircraft's forward movement.

The main aim of the present invention is to provide a helicopter that permits:
- reconsidering and redesigning the services provided by the air force for the surrounding area;
- significantly curbing costs while at the same time strongly extending use options;
- defining a new segment in what is in fact a non-existent helicopter sector;
- providing a new instrument for training pilots suitable for qualifying them to operate on twin-engine machines;
- placing at disposal a generally more practical and efficient system, in particular from an engine cooling viewpoint.

Another object of the present invention is to provide a helicopter that allows to overcome the mentioned drawbacks of the prior art in the ambit of a simple, rational, easy and effective to use as well as low cost solution.

The above mentioned objects are achieved by the present helicopter having the characteristics of claim 1.

Other characteristics and advantages of the present invention will become more evident from the description of several preferred, but not exclusive, embodiments of a helicopter, illustrated as an indicative but not limitative example in the accompanying drawings in which:

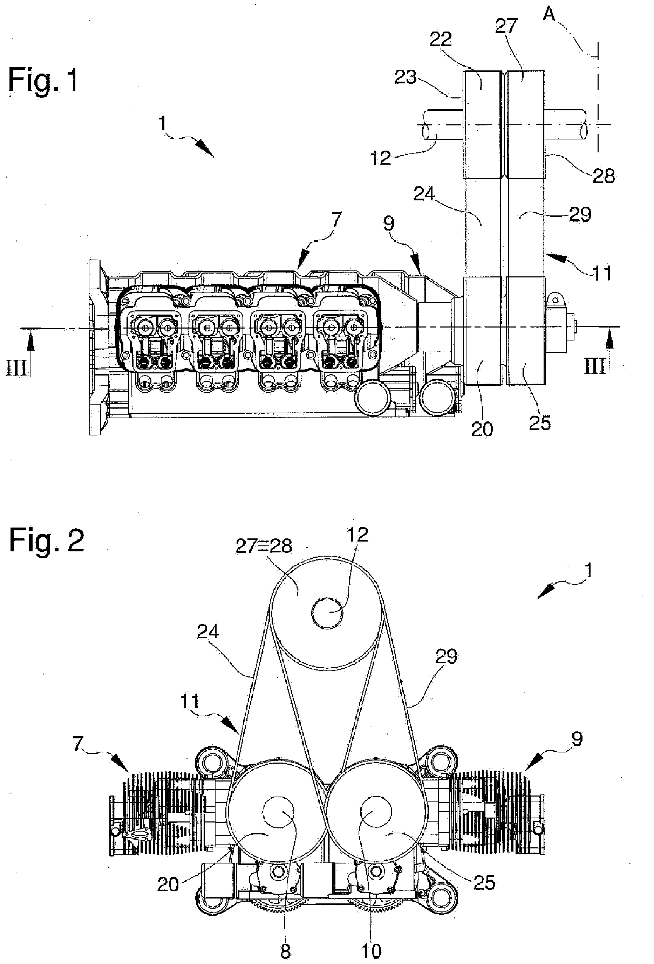

Figure 1 is a side view of the propulsion device of the helicopter according to the invention;
Figure 2 is a front view of the propulsion device of the helicopter according to the invention;

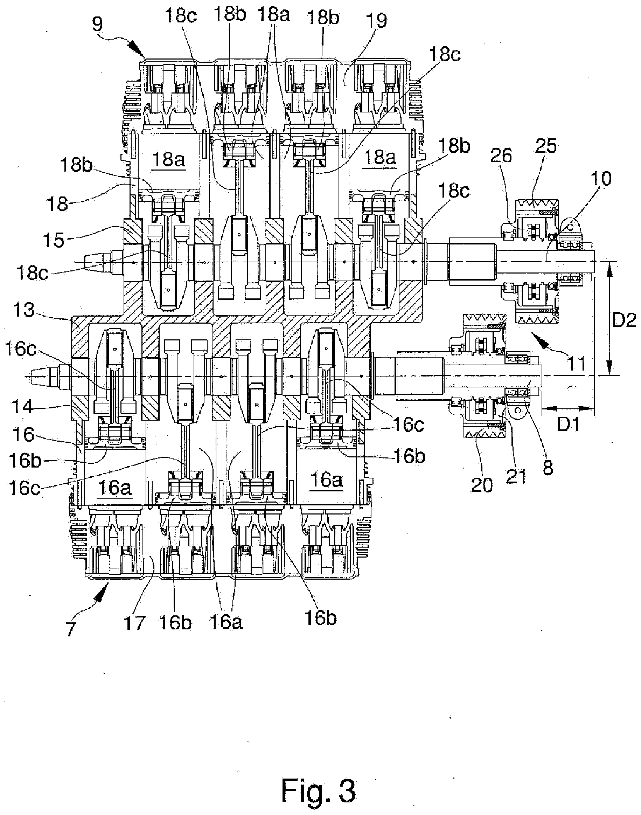

Figure 3 is a sectional view along the plane III - III of Figure 1;

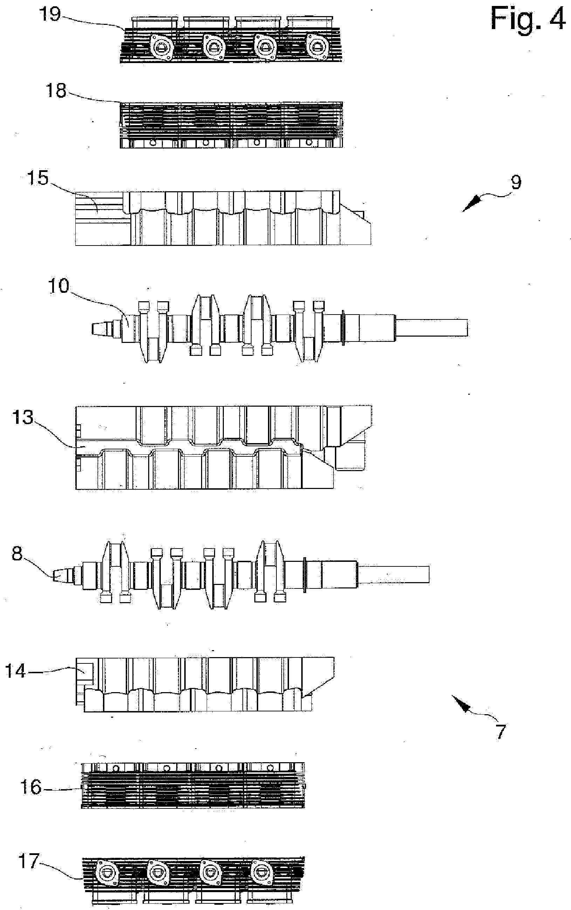

Figure 4 is an exploded view of a detail of the propulsion device of the helicopter according to the invention;
Figure 5 is a side view of one embodiment of the helicopter according to the invention;
Figure 6 is a side view of another embodiment of the helicopter according to the invention;
Figure 7 is a side view of the cooling system of the helicopter according to the invention;
Figure 8 is a front view of the cooling system of the helicopter according to the invention.

With particular reference to these figures, globally indicated by 2 is a helicopter according to the invention.

The helicopter 2 comprises a base frame 3 supporting at least a pilot's cab 4 and at least a rotor 5, 6.

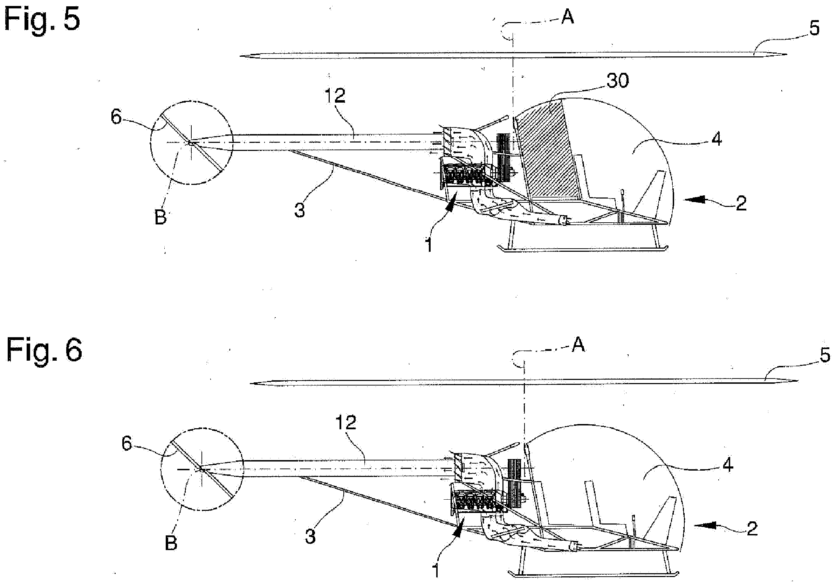

Usefully, the helicopter 2 has two rotors 5, 6, one primary rotor 5, revolving around a substantially vertical primary axis A, and a secondary stabilization rotor 6, revolving around a substantially horizontal secondary axis B fitted to the tail of the helicopter 2 (see figures 5 and 6).

In this regard, the fact is underlined that within this treatise, the adjectives "horizontal" and "vertical" are used with reference to the position taken by the helicopter 2 in normal parked condition on the ground.

On the base frame 3 of the helicopter 2 a propulsion device is also fitted, indicated by 1, which comprises:
- at least a piston engine 7, 9, for rotating at least an engine shaft 8, 10; and
- a transmission unit 11 comprising a drive shaft 12 connectable to the engine shaft 8, 10 and suitable for transmitting motion to the secondary rotor 6.

The device 1 can comprise just one engine 7, 9 and just one engine shaft 8, 10 but preferably more than one is provided.

In the particular embodiment shown in the illustrations, e.g., the device 1 comprises two engines 7, 9, of which a first piston engine 7, for rotating a first engine shaft 8, and a second piston engine 9, for rotating a second engine shaft 10, the drive shaft 12 being connectable both to the first engine shaft 8 and to the second engine shaft 10 so as to be driven in rotation for the transmission of the motion not only to the secondary rotor 6 but also to the primary rotor 5. The two engines 7, 9 operate independently from a mechanical viewpoint but are integrated in a single engine body 13, 14, 15, 16, 17, 18, 19.

In particular, the engines 7, 9 comprise a central guard 13, a first side guard 14 and a second side guard 15, the first engine shaft 8 being housed between the central guard 13 and the first side guard 14 and the second engine shaft 10 being housed between the central guard 13 and the second side guard 15.

The first engine 7 also comprises a first unit 16 of first cylinders 16a wherein are housed sliding a plurality of first pistons 16b which, by means of corresponding first connecting rods 16c, are suitable for operating the first engine shaft 8 in rotation.

The first unit 16 consists, e.g., of a single block which is associated with the first side guard 14 in assembly phase, e.g., by means of screws, bolts or the like; alternative embodiments cannot however be ruled out wherein the first side guard 14 and the first unit 16 are made in a single body piece.

The first engine 7 also comprises a first cylinder head 17, for closing the first cylinders 16a.

The first cylinder head 17, e.g., houses the suction and exhaust valves of each first cylinder 16a and is associated with the first unit 16 in assembly phase, e.g., by means of screws, bolts or the like.

Similarly to the first engine 7, the second engine 9 comprises a second unit 18 of second cylinders 18a wherein are housed sliding a plurality of second pistons 18b which, by means of corresponding second connecting rods 18c, are suitable for operating the second engine shaft 10 in rotation.

In a way similar to the first side guard 14, the second unit 18 consists, e.g., of a single block which is associated with the second side guard 15 in assembly phase, e.g., by means of screws, bolts or the like; alternative embodiments cannot however be ruled out wherein the second side guard 15 and the second unit 18 are made in a single body piece.

The second engine 9, furthermore, comprises a second cylinder head 19, for closing the second cylinders 18a.

The second cylinder head 19, e.g., houses the suction and exhaust valves of each second cylinder 18a and is associated with the second unit 18 in assembly phase, e.g., by means of screws, bolts or the like.

The first cylinders 16a and the second cylinders 18a are arranged horizontally, i.e., defining a sliding direction of the pistons 16b, 18b which is horizontal.

The first cylinders 16a and the second cylinders 18a, furthermore, are arranged in opposite lines, i.e., the cylinders 16a, 18a of each engine 7, 9 are arranged in line, with the sliding directions of the pistons 16b, 18b parallel to one another and each line is positioned at 180° with respect to the other.

Usefully, the first engine shaft 8, the second engine shaft 10 and the drive shaft 12 are substantially parallel to one another and, in particular, are substantially horizontal.

To transfer the motion from the engine shafts 8, 10 to the drive shaft 12, the transmission unit 11 comprises:
- at least a first drive pulley 20 keyed onto the first engine shaft 8, e.g., with the interposition of a first centrifugal clutch 21. During the ignition of the first engine 7, the first centrifugal clutch 21 permits transferring motion to the rotors 5, 6 gradually;
- at least a first driven pulley 22, associated with the drive shaft 12 with interposition of a first free wheel mechanism 23. The first free wheel mechanism 23, in practise, permits uncoupling the motion between the first driven pulley 22 and the drive shaft 12 when the first engine 7 does not apply an equal or higher rotation. In other words, the first free wheel mechanism 23 enables the second engine 9 to transmit motion to the rotors 5, 6 even when the first engine 7 is off or malfunctioning;
- at least a first flexible transmission element 24, closed on itself in a loop and at least in part wrapped around the first drive pulley 20 and the first driven pulley 22;
- at least a second drive pulley 25 keyed on the second engine shaft 10, e.g., with the interposition of a second centrifugal clutch 26. During the ignition of the second engine 9, the second centrifugal clutch 26 permits gradually transferring motion to the rotors 5, 6;
- at least a second driven pulley 27, associated with the drive shaft with interposition of a second free wheel mechanism 28. The second free wheel mechanism 28, in practise, permits uncoupling the movement between the second driven pulley 27 and the drive shaft 12 when the second engine 9 does not apply an equal or greater rotation. In other words, the second free wheel mechanism 28 allows the first engine 7 to transmit motion to the rotors 5, 6 even when the second engine 9 is off or malfunctioning; and
- at least a second flexible transmission element 29, closed on itself in a loop and at least in part wrapped around the second drive pulley 25 and the second driven pulley 27.

Preferably, the flexible transmission elements 24, 29 consist of respective drive belts, made e.g. of a material such as textile fibres or rubber covered nylon threads, steel wires or rubber covered carbon fibres, the very nature of which reduces the vibrations and makes the transmission of motion to the rotors 5, 6 more uniform.

In this respect, it is underlined that the cyclic operation of the piston engines results in the generation of the rotary motion of the engines shafts 8, 10 occurring in fits and starts (corresponding to the expansion phases of the Otto or Diesel cycle which alternate with the exhaust, suction and compression phases inside the engine).

For this reason, the use of drive belts, with respect to other more rigid transmission systems like chains or gear wheels, allows reducing the vibrations and also conveys to the transmission unit 11 a flexible coupling function.

The first engine shaft 8 and the second engine shaft 10 are of the same length and are axially staggered by a preset distance D 1.

In other words, the engine shafts 8, 10 are substantially identical the one to the other, so as to reduce their production and industrialization costs, and the first cylinders 16a are staggered with respect to the second cylinders 18a by a distance equal to the preset distance D 1.

The drive pulleys 20, 25, furthermore, have a diameter greater than the centre distance D2 defined between the engine shafts 8, 10, the first drive pulley 20 being housed at least in part in a space defined between the second drive pulley 25 and the central guard 13.

This way, a device 1 can be obtained with considerably reduced overall dimensions, with a very small centre distance D2 and an extension in axial direction which is as compact as possible.

The driven pulleys 22, 27 are fitted on the drive shaft 12 one in the proximity of the other.

On one side of the driven pulleys 22, 27 the drive shaft 12, which as has been said is substantially horizontal, terminates in an extremity wherein the motion is deviated upwards, i.e., towards the primary rotor 5, e.g., by means of a conventional system of bevel gear wheels and a reduction unit, not shown in the illustrations.

On the opposite side of the driven pulleys 22, 27, instead, the drive shaft 12 has an extension extending along the entire tail of the helicopter 2 to transmit the motion to the secondary rotor 6, e.g., by means of a second system of bevel gear wheels, not shown in the illustrations.

Preferably each engine 7, 9 is sized with a substantial power rating of 120 HP and can be used, at the same time as the other, to rotate both rotors 5, 6.

Each engine 7, 9 has its own lubrication, supply and electronic control system, as well as its own supply and injection redundancy according to air-force patterns.

In particular, the running of the two engines 7, 9 is supervised by the FADEC system, which is designed to control the supply and the electronic control system of the individual engines 7, 9 (injection, ignition), including redundancy and diagnostics, as well as having the function of managing optimization in conditions of coordinated operation (synchronization) and emergency of the two engines 7, 9.

Usefully, the helicopter 2 equipped with the device 1 as previously described can be an aircraft of the following type:
- a helicopter with maximum weight at takeoff of 600 kg. The architecture of the machine can accommodate a crew of two people with a small load compartment 30 (figure 5). This type of aircraft can be certified in category A, i.e., it is a helicopter which, in case of an emergency, is able to land and take off vertically with just one of the engines 7, 9 and is therefore also authorized to fly over urban centres and sheets of water. In practice, by having a load within 600 kg, the two 120 HP engines 7, 9 normally operate at 50% of rated power while, in the case of one of them breaking down, the other is able to terminate the flight in safety conditions working at full power;
- a helicopter with maximum weight at takeoff of around 1000 kg. The architecture of the machine can accommodate a crew of four people (figure 6) or two people with a more spacious load compartment. This type of aircraft cannot be certified in category A because the helicopter 2 is unable to take off and land vertically with just one of the engines 7, 9. In this configuration, the two 120 HP engines 7, 9 must always operate at the same time to produce the total power required for flight. In case of a breakdown of one of the two engines 7, 9 an emergency landing can in any case be made.

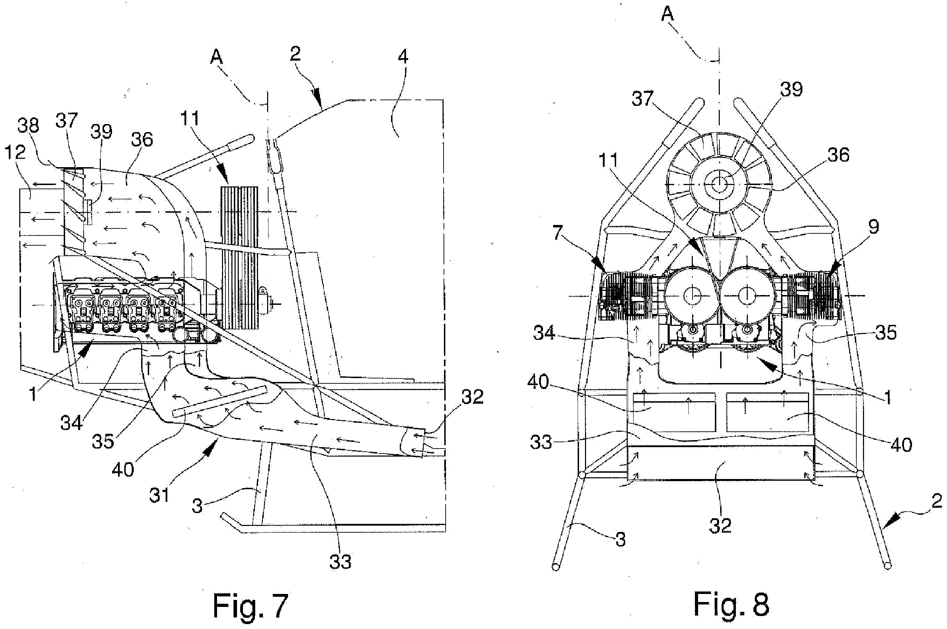

As can be seen in the above figures 5-6 and in the detailed figures 7-8, the helicopter 2 also comprises an air-cooling system 31 suitable for cooling the engines 7, 9.

The fact is underlined that, in the particular embodiment shown in the illustrations where there are two engines 7, 9, the air-cooling system 31 is able to cool both engines 7, 9; it is however easy to appreciate that in the event of just one engine 7, 9 or more than two engines 7, 9 being envisaged, the air-cooling system 31 is such as to permit cooling all engines 7, 9.

The air-cooling system 31 has:
- at least a front air vent 32, located on the helicopter 2 in front position, i.e., so as to be turned forwards when the helicopter 2 is in condition of normal horizontal forward flight;
- at least an air flow duct 33, 34, 35, 36 suitable for at least partially brushing the engines 7, 9 by the air coming from the front air vent 32;
- at least an air suction impeller 37, associated with the drive shaft 12 and arranged along the flow duct 33, 34, 35, 36;
at least an outlet mouth 38 for the air coming from the flow duct 33, 34, 35, 36, located on the helicopter 2 in rear position, i.e., so it is turned backwards when the helicopter 2 is in normal horizontal forward flight.

In both embodiments shown in the figures 5 and 6, e.g., the front air vent 32 is located under the pilot's cab 4 while the outlet mouth 38 is located behind the pilot's cab 4 substantially around the drive shaft 12.

The flow duct 33, 34, 35, 36 comprises:
- an inlet manifold 33 arranged downstream of the front air vent 32. In this respect, it is underlined that as part of the present treatise, the expressions "downstream" and "upstream" are considered with reference to the direction of flow of the air travelling along the flow duct 33, 34, 35, 36;
- a pair of cooling branches 34, 35 diverging from the inlet manifold 33, of which a first cooling branch 34 surrounding at least in part the first engine 7 and a second cooling branch 35 surrounding at least in part the second engine 9; and
- an outlet manifold 36 communicating with both cooling branches 34, 35 and which terminates in the outlet mouth 38.

In both embodiments shown in the figures 5 and 6, the inlet manifold 33 substantially extends horizontally from the front air vent 32 as far as underneath the engines 7, 9.

The cooling branches 34, 35 deviate the air flow upwards so as to cool the cylinder units 16, 18 and the cylinder heads 17, 19, which for this purpose are equipped with fins.

Coming out of the engines 7, 9, the cooling branches 34, 35 again deviate the air flow, returning it to horizontal position, and then connect to the outlet manifold 36, which extends substantially horizontally from the cooling branches 34, 35 to the outlet mouth 38.

The suction impeller 37 is arranged in correspondence of the outlet manifold 36, substantially in the proximity of the outlet mouth 38.

The suction impeller 37 is associated with the drive shaft 12 with interposition of clutch means 39, of the type of an electro-clutch.

The clutch means 39 can be controlled by the pilot or by the FADEC system, making it possible to connect and disconnect the suction impeller 37 according to the different flight conditions.

In this respect, for example, it is underlined that, in horizontal forward flight condition, the arrangement of the front air vent 32 and of the outlet mouth 38 allows the air to cross the flow duct 33, 34, 35, 36 even with the suction impeller 37 deactivated.

The air-cooling system 31 also comprises at least a radiator unit 40 arranged along the flow duct 33, 34, 35, 36 and designed to allow heat exchange with a liquid cooling system.

The radiator unit 40 consists, e.g., of an air/liquid heat exchanger, externally brushed by the air that crosses the flow duct 33, 34, 35, 36 and internally crossed by a cooling liquid, of the oil type or the like.

The cooling liquid circulates inside the liquid cooling system which is not shown in detail in the illustrations and is used to cool the inner parts of the engines 7, 9 or other components of the helicopter 2 which require cooling, such as drive gears, reduction units and the like.

The radiator unit 40 is located in correspondence of the inlet manifold 33.

In this respect, it is underlined that the inlet manifold 33 has a section widening in correspondence of the radiator unit 40, and this permits a reduction in the speed of flow, flow rate being equal, and a consequent increase in heat exchange efficiency.

It is therefore easy to appreciate that the flow duct 33, 34, 35, 36 is shaped and sized so as to ensure a global heat exchange provided by the sum of the heat exchange with the radiator unit 40 and of the heat exchange with the engines 7, 9.

It has in fact been ascertained how the invention permits achieving the proposed objects.

In particular, the fact is underlined that the helicopter according to the present invention is a twin-engine aircraft with extensive operating options and which, nevertheless, has an enormously reduced cost, both in terms of lower production costs (e.g., around 300,000 Euro) and lower running costs (e.g., around 200 - 250 Euro per hour of use).

To this must be added that the particular solution of providing a cooling system such as that of the invention permits:
- not absorbing power from the engine to operate the suction impeller when the helicopter is in forward flight;
- ensuring the continuation of the forward flight even in the event of the malfunction of the suction impeller, thus enabling the helicopter to land without the engines reaching critical conditions from a heat point of view.

## Claims

1. Helicopter (2), comprising a base frame (3) supporting at least a pilot's cab (4), at least a rotor (5, 6), of which a primary rotor (5) and a secondary stabilization rotor (6), and at least a propulsion device (1) comprising:
- at least a piston engine (7, 9), for rotating at least an engine shaft (8, 10); and
- a transmission unit (11) comprising a drive shaft (12) connectable to said engine shaft (8, 10) and suitable for transmitting motion to said secondary rotor (6);
**characterized in that** it comprises an air-cooling system (31) of said engine (7, 9) having:
- at least a front air vent (32), located on said helicopter (2) in front position;
- at least an air flow duct (33, 34, 35, 36) suitable for at least partially brushing said engine (7, 9) by the air coming from said front air vent (32);
- at least an air suction impeller (37), associated with said drive shaft (12) and arranged inside said flow duct (33, 34, 35, 36);
- at least an outlet mouth (38) for the air coming from said flow duct (33, 34, 35, 36), located on said helicopter (2) in rear position.

2. Helicopter (2) according to claim 1, **characterized in that** said propulsion device (1) comprises two of said engines (7, 9), of which a first piston engine (7), for rotating a first engine shaft (8), and a second piston engine (9), for rotating a second engine shaft (10), said drive shaft (12) being connectable both to said first engine shaft (8) and to said second engine shaft (10).

3. Helicopter (2) according to claim 2, **characterized in that** said flow duct (33, 34, 35, 36) comprises:
- an inlet manifold (33) arranged downstream of said front air vent (32);
- a pair of cooling branches (34, 35) diverging from said inlet manifold (33), of which a first cooling branch (34) surrounding at least in part said first engine (7) and a second cooling branch (35) surrounding at least in part said second engine (9);
- an outlet manifold (36) communicating with both said cooling branches (34, 35) and which terminates in said outlet mouth (38).

4. Helicopter (2) according to claim 3, **characterized in that** said suction impeller (37) is arranged in correspondence of said outlet manifold (36).

5. Helicopter (2) according to one or more of the preceding claims, **characterized in that** said air-cooling system (31) comprises at least a radiator unit (40) arranged along said flow duct (33, 34, 35, 36) for the heat exchange with a liquid cooling system.

6. Helicopter (2) according to claim 5, **characterized in that** said radiator unit (40) is located in correspondence of said inlet manifold (33).

7. Helicopter (2) according to one or more of the preceding claims, **characterized in that** said suction impeller (37) is associated with said drive shaft (12) with interposition of clutch means (39).

8. Helicopter (2) according to one or more of claims 2 to 7, **characterized in that** said engines (7, 9) comprise a central guard (13), a first side guard (14) and a second side guard (15), said first engine shaft (8) being housed between said central guard (13) and said first side guard (14) and said second engine shaft (10) being housed between said central guard (13) and said second side guard (15).

9. Helicopter (2) according to claim 8, **characterized in that**:
- said first engine (7) comprises a first unit (16) of first cylinders (16a) wherein are housed sliding a plurality of first pistons (16b) for operating said first engine shaft (8), said first unit (16) being associated with said first side guard (14); and
- said second engine (9) comprises a second unit (18) of second cylinders (18a) wherein are housed sliding a plurality of second pistons (18b) for operating said second engine shaft (10), said second unit (18) being associated with said second side guard (15).

10. Helicopter (2) according to claim 9, **characterized in that**:
- said first engine (7) comprises a first cylinder head (17), for closing said first cylinders (16a), said first cylinder head (17) being associated with said first unit (16); and
- said second engine (9) comprises a second cylinder head (19), for closing said second cylinders (18a), said second cylinder head (19) being associated with said second unit (18).

11. Helicopter (2) according to claim 9 or 10, **characterized in that** said first cylinders (16a) and said second cylinders (18a) are horizontal and are arranged in opposite lines.

12. Helicopter (2) according to one or more of claims 2 to 11, **characterized in that** said first engine shaft (8) and said second engine shaft (10) are of the same length and are axially staggered by a preset distance (D2).

13. Helicopter (2) according to one or more of claims 2 to 12, **characterized in that** said first engine shaft (8), said second engine shaft (10) and said drive shaft (12) are substantially parallel to one another.

14. Helicopter (2) according to one or more of claims 2 to 13, **characterized in that** said first engine shaft (8), said second engine shaft (10) and said drive shaft (12) are substantially horizontal.

15. Helicopter (2) according to one or more of claims 2 to 14, **characterized in that** said transmission unit (11) comprises:
- at least a first drive pulley (20) associated with said first engine shaft (8);
- at least a first driven pulley (22) associated with said drive shaft (12) with interposition of a first free wheel mechanism (23);
- at least a first flexible transmission element (24) closed on itself in a loop and at least in part wrapped around said first drive pulley (20) and said first driven pulley (22);
- at least a second drive pulley (25) associated with said second engine shaft (10);
- at least a second driven pulley (27) associated with said drive shaft (12) with interposition of a second free wheel mechanism (28); and
- at least a second flexible transmission element (29) closed on itself in a loop and at least in part wrapped around said second drive pulley (25) and said second driven pulley (27).

16. Helicopter (2) according to claim 15, **characterized in that** said drive pulleys (20, 25) have a diameter greater than the centre distance (D2) defined between said engine shafts (8, 10), said first drive pulley (20) being housed at least in part in a space defined between said second drive pulley (25) and said central guard (13).

## Patentansprüche

1. Hubschrauber (2), umfassend einen Basisrahmen (3), der mindestens eine Pilotenkabine (4), mindestens einen Rotor (5, 6), einen primären Rotor (5) und einen sekundären Stabilisierungsrotor (6) umfassend, und zumindest eine Antriebsvorrichtung (1) trägt, umfassend:
- zumindest einen Kolbenmotor (7, 9) zum Drehen von zumindest einer Motorwelle (8, 10); und
- eine Getriebeeinheit (11), die eine Antriebswelle (12) umfasst, welche mit der Motorwelle (8, 10) verbindbar und zum Übertragen von Bewegung auf den sekundären Rotor (6) geeignet ist;
**dadurch gekennzeichnet, dass** sie ein Luftkühlungssystem (31) des Motors (7, 9) mit Folgendem umfasst:
- mindestens einem vorderen Luftloch (32), das sich am Hubschrauber (2) in vorderer Position befindet;
- mindestens einem Luftstromkanal (33, 34, 35, 36), der dazu geeignet ist, den Motor (7, 9) mit der Luft, die vom vorderen Luftloch (32) kommt, zumindest teilweise zu streifen;
- mindestens einem Luftansauglaufrad (37), das der Antriebswelle (12) zugeordnet ist und innerhalb des Stromkanals (33, 34, 35, 36) angeordnet ist;
- mindestens einer Auslassmündung (38) für die Luft, die vom Stromkanal (33, 34, 35, 36) kommt, welche sich am Hubschrauber (2) in rückseitiger Position befindet.

2. Hubschrauber (2) nach Anspruch 1, **dadurch gekennzeichnet, dass** die Antriebsvorrichtung (1) zwei der Motoren (7, 9) umfasst, von diesen einen ersten Kolbenmotor (7) zum Drehen einer ersten Motorwelle (8) und einen zweiten Kolbenmotor (9) zum Drehen einer zweiten Motorwelle (10), wobei die Antriebswelle (12) sowohl mit der ersten Motorwelle (8) als auch mit der zweiten Motorwelle (10) verbindbar ist.

3. Hubschrauber (2) nach Anspruch 2, **dadurch gekennzeichnet, dass** der Luftstromkanal (33, 34, 35, 36) Folgendes umfasst:
- einen Einlassverteiler (33), der stromabwärts vom Luftloch (32) angeordnet ist;
- ein Paar Kühlabzweigungen (34, 35), die sich vom Einlassverteiler (33) verzweigen, von diesen eine erste Kühlabzweigung (34), die den ersten Motor (7) zumindest teilweise umgibt, und eine zweite Kühlabzweigung (35), die den zweiten Motor (9) zumindest teilweise umgibt;
- einen Auslassverteiler (36), der mit beiden der Kühlabzweigungen (34, 35) in Verbindung steht und in der Auslassmündung (38) endet.

4. Hubschrauber (2) nach Anspruch 3, **dadurch gekennzeichnet, dass** das Sauglaufrad (37) dem Auslassverteiler (36) entsprechend angeordnet ist.

5. Hubschrauber (2) nach einem der vorhergehenden Ansprüche, **dadurch gekennzeichnet, dass** das Luftkühlsystem (31) zumindest eine Kühlereinheit (40), die den Stromkanal (33, 34, 35, 36) entlang angeordnet ist, zum Wärmeaustausch mit einem Flüssigkeitskühlsystem umfasst.

6. Hubschrauber (2) nach Anspruch 5, **dadurch gekennzeichnet, dass** die Kühlereinheit (40) dem Einlassverteiler (33) entsprechend angeordnet ist.

7. Hubschrauber (2) nach einem der vorhergehenden Ansprüche, **dadurch gekennzeichnet, dass** das Sauglaufrad (37) unter Zwischenschaltung von Kupplungsmitteln (39) der Antriebswelle (12) zugeordnet ist.

8. Hubschrauber (2) nach einem der Ansprüche 2 bis 7, **dadurch gekennzeichnet, dass** die Motoren (7, 9) einen zentralen Schutz (13), einen ersten Seitenschutz (14) und einen zweiten Seitenschutz (15) umfassen, wobei die erste Motorwelle (8) zwischen dem zentralen Schutz (13) und dem ersten Seitenschutz (14) angeordnet ist und die zweite Motorwelle (10) zwischen dem zentralen Schutz (13) und dem zweiten Seitenschutz (15) angeordnet ist.

9. Hubschrauber (2) nach Anspruch 8, **dadurch gekennzeichnet, dass**:
- der erste Motor (7) eine erste Einheit (16) von ersten Zylindern (16a) umfasst, in der mehrere erste Kolben (16b) zum Betreiben der ersten Motorwelle (8) gleitend aufgenommen sind, wobei die erste Einheit (16) dem ersten Seitenschutz (14) zugeordnet ist; und
- der zweite Motor (9) eine zweite Einheit (18) von zweiten Zylindern (18a) umfasst, in der mehrere zweite Kolben (18b) zum Betreiben der zweiten Motorwelle (10) gleitend aufgenommen sind, wobei die zweite Einheit (18) dem zweiten Seitenschutz (15) zugeordnet ist.

10. Hubschrauber (2) nach Anspruch 9, **dadurch gekennzeichnet, dass**:
- der erste Motor (7) einen ersten Zylinderkopf (17) zum Schließen der ersten Zylinder (16a) umfasst, wobei der erste Zylinderkopf (17) der ersten Einheit (16) zugeordnet ist; und
- der zweite Motor (9) einen zweiten Zylinderkopf (19) zum Schließen der zweiten Zylinder (18a) umfasst, wobei der zweite Zylinderkopf (19) der zweiten Einheit (18) zugeordnet ist.

11. Hubschrauber (2) nach einem der Ansprüche 9 oder 10, **dadurch gekennzeichnet, dass** die ersten Zylinder (16a) und die zweiten Zylinder (18a) horizontal sind und in gegenüberliegenden parallelen Linien angeordnet sind.

12. Hubschrauber (2) nach einem der Ansprüche 2 bis 11, **dadurch gekennzeichnet, dass** die erste Motorwelle (8) und die zweite Motorwelle (10) dieselbe Länge aufweisen und axial um einen vorgegebenen Abstand (D1) versetzt sind.

13. Hubschrauber (2) nach einem der Ansprüche 2 bis 12, **dadurch gekennzeichnet, dass** die erste Motorwelle (8), die zweite Motorwelle (10) und die Antriebswelle (12) im Wesentlichen parallel zueinander sind.

14. Hubschrauber (2) nach einem der Ansprüche 2 bis 13, **dadurch gekennzeichnet, dass** die erste Motorwelle (8), die zweite Motorwelle (10) und die Antriebswelle (12) im Wesentlichen horizontal sind.

15. Hubschrauber (2) nach einem der Ansprüche 2 bis 14, **dadurch gekennzeichnet, dass** die Getriebeeinheit (11) folgendes umfasst:
- mindestens eine erste Antriebsscheibe (20), die der ersten Motorwelle (8) zugeordnet ist;
- mindestens eine erste angetriebene Sscheibe (22), die unter Zwischenschaltung eines ersten Freilaufmechanismus (23) der Antriebswelle (12) zugeordnet ist;
- mindestens ein erstes flexibles Getriebeelement (24), das in sich in einer Schleife geschlossen ist und zumindest teilweise um die erste Antriebsscheibe (20) und die erste angetriebene Scheibe (22) gewickelt ist;
- mindestens eine zweite Antriebsscheibe (25), die der zweiten Motorwelle (10) zugeordnet ist;
- mindestens eine zweite angetriebene Scheibe (27), die unter Zwischenschaltung eines zweiten Freilaufmechanismus (28) der Antriebswelle (12) zugeordnet ist; und
- mindestens ein zweites flexibles Getriebeelement (29), das in sich in einer Schleife geschlossen ist und zumindest teilweise um die zweite Antriebsscheibe (25) und die zweite angetriebene Scheibe (27) gewickelt ist.

16. Hubschrauber (2) nach Anspruch 15, **dadurch gekennzeichnet, dass** die Antriebsscheiben (20, 25) einen Durchmesser aufweisen, der größer als der Mittelabstand (D2) ist, welcher zwischen den Motorwellen (8, 10) definiert ist, wobei die erste Antriebsscheibe (20) zumindest teilweise in einem Raum aufgenommen ist, der zwischen der zweiten Antriebsscheibe (25) und dem zentralen Schutz (13) definiert ist.

## Revendications

1. Hélicoptère (2), comprenant un châssis de base (3) supportant au moins une cabine de pilotage (4), au moins un rotor (5, 6), dont un rotor principal (5) et un rotor secondaire de stabilisation (6), et au moins un dispositif de propulsion (1) comprenant :
- au moins un moteur à pistons (7, 9), pour entraîner en rotation au moins un arbre moteur (8, 10) ; et
- une unité de transmission (11) comprenant un arbre d'entraînement (12) apte à être relié audit arbre moteur (8, 10) et apte à transmettre du mouvement audit rotor secondaire (6) ;
**caractérisé en ce qu'**il comprend un système de refroidissement à air (31) dudit moteur (7, 9) possédant :
- au moins une prise d'air frontale (32), située sur ledit hélicoptère (2) en position frontale ;
- au moins un conduit de circulation d'air (33, 34, 35, 36) apte à balayer au moins partiellement ledit moteur (7, 9) avec l'air provenant de ladite prise d'air frontale (32) ;
- au moins une hélice d'aspiration d'air (37), associée audit arbre d'entraînement (12) et agencée à l'intérieur dudit conduit de circulation (33, 34, 35, 36) ;
- au moins une bouche de sortie (38) pour l'air provenant dudit conduit de circulation (33, 34, 35, 36), située sur ledit hélicoptère (2) en position arrière.

2. Hélicoptère (2) selon la revendication 1, **caractérisé en ce que** ledit dispositif de propulsion (1) comprend deux desdits moteurs (7, 9), dont un premier moteur à pistons (7), pour entraîner en rotation un premier arbre moteur (8), et un second moteur à pistons (9), pour entraîner en rotation un second arbre moteur (10), ledit arbre d'entraînement (12) étant apte à être relié à la fois audit premier arbre moteur (8) et audit second arbre moteur (10).

3. Hélicoptère (2) selon la revendication 2, **caractérisé en ce que** ledit conduit de circulation (33, 34, 35, 36) comprend :
- un collecteur d'admission (33) agencé en aval de ladite prise d'air frontale (32) ;
- une paire de branches de refroidissement (34, 35) divergeant dudit collecteur d'admission (33), dont une première branche de refroidissement (34) entourant au moins partiellement ledit premier moteur (7) et une seconde branche de refroidissement (35) entourant au moins partiellement ledit second moteur (9) ;
- un collecteur de sortie (36) en communication avec lesdites deux branches de refroidissement (34, 35) et qui se termine dans ladite bouche de sortie (38).

4. Hélicoptère (2) selon la revendication 3, **caractérisé en ce que** ladite hélice d'aspiration (37) est agencée en correspondance avec ledit collecteur de sortie (36).

5. Hélicoptère (2) selon l'une ou plusieurs des revendications précédentes, **caractérisé en ce que** ledit système de refroidissement à air (31) comprend au moins une unité de radiateur (40) agencée dans ledit conduit de circulation (33, 34, 35, 36) pour l'échange thermique avec un système de refroidissement liquide.

6. Hélicoptère (2) selon la revendication 5, **caractérisé en ce que** ladite unité de radiateur (40) est située en correspondance avec ledit collecteur d'admission (33).

7. Hélicoptère (2) selon l'une ou plusieurs des revendications précédentes, **caractérisé en ce que** ladite hélice d'aspiration (37) est associée audit arbre d'entraînement (12) avec interposition de moyens d'embrayage (39).

8. Hélicoptère (2) selon l'une ou plusieurs des revendications 2 à 7, **caractérisé en ce que** lesdits moteurs (7, 9) comprennent une protection centrale (13), une première protection latérale (14) et une seconde protection latérale (15), ledit premier arbre moteur (8) étant logé entre ladite protection centrale (13) et ladite première protection latérale (14) et ledit second arbre moteur (10) étant logé entre ladite protection centrale (13) et ladite second protection latérale (15).

9. Hélicoptère (2) selon la revendication 8, **caractérisé en ce que** :
- ledit premier moteur (7) comprend une première unité (16) de premiers cylindres (16a) dans lesquels sont logés de manière coulissante une pluralité de premiers pistons (16b) pour entraîner ledit premier arbre moteur (8), ladite première unité (16) étant associée à ladite première protection latérale (14) ; et
- ledit second moteur (9) comprend une seconde unité (18) de seconds cylindres (18a) dans lesquels sont logés de manière coulissante une pluralité de seconds pistons (18b) pour entraîner ledit second arbre moteur (10), ladite seconde unité (18) étant associée à ladite seconde protection latérale (15).

10. Hélicoptère (2) selon la revendication 9, **caractérisé en ce que** ;
- ledit premier moteur (7) comprend une première culasse (17), pour fermer lesdits premiers cylindres (16a), ladite première culasse (17) étant associée à ladite première unité (16) ; et
- ledit second moteur (9) comprend une seconde culasse (19), pour fermer lesdits seconds cylindres (18a), ladite seconde culasse (19) étant associée à ladite seconde unité (18).

11. Hélicoptère (2) selon la revendication 9 ou 10, **caractérisé en ce que** lesdits premiers cylindres (16a) et lesdits seconds cylindres (18a) sont horizontaux et sont agencés dans des rangées opposées.

12. Hélicoptère (2) selon l'une ou plusieurs des revendications 2 à 11, **caractérisé en ce que** ledit premier arbre moteur (8) et ledit second arbre moteur (10) sont de même longueur et sont axialement décalés d'une distance prédéfinie (D1).

13. Hélicoptère (2) selon l'une ou plusieurs des revendications 2 à 12, **caractérisé en ce que** ledit premier arbre moteur (8), ledit second arbre moteur (10) et ledit arbre d'entraînement (12) sont sensiblement parallèles entre eux.

14. Hélicoptère (2) selon l'une ou plusieurs des revendications 2 à 13, **caractérisé en ce que** ledit premier arbre moteur (8), ledit second arbre moteur (10) et ledit arbre d'entraînement (12) sont sensiblement horizontaux.

15. Hélicoptère (2) selon l'une ou plusieurs des revendications 2 à 14, **caractérisé en ce que** ladite unité de transmission (11) comprend :
- au moins une première poulie motrice (20) associée audit premier arbre moteur (8) ;
- au moins une première poulie réceptrice (22) associée audit arbre d'entraînement (12) avec interposition d'un premier mécanisme de roue libre (23) ;
- au moins un premier élément de transmission flexible (24) fermé sur lui-même dans une boucle et au moins partiellement enroulé autour de ladite première poulie motrice (20) et ladite première poulie réceptrice (22) ;
- au moins une seconde poulie motrice (25) associée audit second arbre moteur (10) ;
- au moins une seconde poulie réceptrice (27) associée audit arbre d'entraînement (12) avec interposition d'un second mécanisme de roue libre (28) ; et
- au moins un second élément de transmission flexible (29) fermé sur lui-même dans une boucle et au moins partiellement enroulé autour de ladite seconde poulie motrice (25) et ladite seconde poulie réceptrice (27).

16. Hélicoptère (2) selon la revendication 15, **caractérisé en ce que** lesdites poulies motrices (20, 25) ont un diamètre supérieur à l'entraxe (D2) défini entre lesdits arbres moteur (8, 10), ladite première poulie motrice (20) étant logée au moins partiellement dans un espace défini entre ladite seconde poulie motrice (25) et ladite protection centrale (13).
